# EUROPEAN PATENT APPLICATION

(11) **EP 4 837 709 A1**
(43) Date of publication of application: **11.11.2026**
(21) Application number: 24922419.7
(22) Date of filing: 29.11.2024
(51) Int. Cl.: B25J 13/08, B25J 5/00, B25J 9/16, B25J 19/02, B62D 57/028, G05D 1/622, G05D 109/12

(54) **ROBOT AND METHOD FOR CONTROLLING ROBOT**

(30) Priority: 01.02.2024 KR 20240016085
(71) Applicant: LG Electronics Inc., Yeongdeungpo-gu Seoul 07336 (KR)
(72) Inventor: KIM, Deoksu, Seoul 08592 (KR)
(74) Representative: Vossius & Partner Patentanwälte Rechtsanwälte mbB
(86) International application number: PCT/KR2024/019368
(87) International publication number: WO 2025/164910

(57) **Abstract**

The present invention relates to a robot, comprising: a robot body in which a motor and a battery are accommodated; a pair of leg units provided on the robot body; and a pair of wheels rotatably coupled to the pair of leg units, respectively, wherein, when the robot body is located within a preset reference distance from an obstacle having a predetermined height or more, the robot body travels toward the obstacle after moving away from the obstacle, thereby providing an effect of quickly climbing over the obstacle.

## Description

### [Technical Field]

The present invention relates to a robot and a method for controlling a robot. More particularly, the present invention relates to a robot capable of providing various services according to a user's command input.

### [Background Art]

With the recent advancements in robotic technology, the use of robots has been increasing in households as well as in industrial fields.

Domestic robots (home robots) include robots that perform household chores, such as cleaning, or control home appliances. They also include robots that serve as a user's assistant or provide educational services using Artificial Intelligence (AI), or robots that act as a substitute for pets.

However, conventional domestic robots have a limitation in that they perform only one of the above-described functions and cannot perform various functions according to a user's needs or circumstances.

Meanwhile, robots include stationary robots that perform functions at a fixed location, as well as mobile robots that are capable of moving. In particular, for robots used in the home, mobile robots that move around the house to assist or follow the user are primarily utilized.

Among such mobile robots, two-wheeled robots have the advantage of being easy to store because they occupy a small footprint on the ground. Additionally, they have a small turning radius when changing directions, making them particularly suitable for use in homes where space is relatively confined.

In the case of such a two-wheeled robot, since balance must be maintained using only two wheels, it is necessary to maintain balance in the process of climbing over an obstacle or the like.

In this regard, US Patent Application Publication No. US 2020-0362972A1 (November 19, 2020) discloses a mobile robot that moves using a pair of legs provided with wheels.

The mobile robot described above is capable of moving by rotating the wheels provided on the pair of legs while an object is lifted using an arm.

However, the arm of the above mobile robot has only a function of lifting an object, and there is a limitation in that the function of the robot cannot be expanded through the arm.

In addition, in order to maintain balance while the above mobile robot travels or is stopped, a body to which the leg unit is coupled is rotated in a pendulum shape, and balance is maintained by rotating a counter-balance in correspondence with the rotation of the body.

Therefore, the above mobile robot must operate a motor to continuously rotate the wheel and the counter-balance in order to stably maintain its posture. In this case, the mobile robot has a limitation in that it must continuously consume electrical energy even when the robot is stopped in place or on standby.

In addition, the above mobile robot is capable of maintaining balance on flat ground, but has a limitation in that it cannot maintain balance when climbing over an obstacle having a height difference.

Meanwhile, Korean Patent Application Publication No. 10-2021-0064016 (June 2, 2021) discloses a traveling module capable of lifting a driving unit while traveling along a floor of various heights.

The above traveling module is capable of easily climbing over an obstacle or the like by lifting a portion of the wheels.

However, the above traveling module travels along the ground by rotating six wheels, and at least four wheels are in contact with the ground or the obstacle even when climbing over the obstacle.

Therefore, the above traveling module has a limitation in that it cannot be applied to a two-wheeled robot that travels on the ground using two wheels.

### [Summary of Invention]

### [Technical Problem]

The present invention has been made to improve upon the above-described conventional problems, and an object of the present invention is to provide a robot capable of performing various functions according to a situation or a user's command.

Another object of the present invention is to provide a robot capable of changing a function in use to a new function, or adding a new function to a function in use.

Still another object of the present invention is to provide a robot capable of preventing the robot from falling by being caught on an obstacle in the process of climbing over the obstacle.

Yet another object of the present invention is to provide a robot capable of reducing a locational restriction on where the robot can travel.

### [Technical Solution]

To achieve the above object, a robot according to the present invention includes: a robot body in which a motor and a battery are accommodated; a pair of leg units provided on the robot body; and a pair of wheels rotatably coupled to the pair of leg units, respectively, wherein, when the robot body is located within a preset reference distance from an obstacle having a predetermined height or more, the robot body may travel toward the obstacle after moving away from the obstacle.

At this time, the robot body may travel at a preset first traveling speed, and when the robot body travels toward the obstacle after moving away from the obstacle, the robot body may travel at a second traveling speed different from the first traveling speed.

At this time, the second traveling speed may be faster than the first traveling speed.

Meanwhile, when the robot body is located within the preset reference distance from the obstacle having the predetermined height or more, the robot body may travel forward toward the obstacle until the pair of wheels are both in contact with the obstacle, and when the pair of wheels are both in contact with the obstacle, the robot body may travel backward so as to move away from the obstacle by a preset distance and then travel forward toward the obstacle.

Accordingly, the robot body may climb over the obstacle.

Meanwhile, the robot body may climb over the obstacle when a height of the obstacle is greater than or equal to a preset first height and less than a preset second height, and may avoid the obstacle when the height of the obstacle is greater than or equal to the second height.

Meanwhile, the robot according to the present invention may further include a sensor unit disposed on the robot body or the leg unit and configured to measure a distance to the obstacle.

Meanwhile, to achieve the above object, a method for controlling a robot according to the present invention may include: an obstacle detection step of detecting an obstacle disposed on a ground while the robot travels at a preset first speed along the ground by rotating the wheel; and a climbing step of, when a longitudinal direction of the obstacle is perpendicular to a front of the robot, advancing forward at a second speed greater than the first speed to climb over the obstacle.

At this time, when a height of the obstacle detected in the obstacle detection step is greater than or equal to a preset first height and less than a preset second height, the climbing step may be performed, and when the height of the obstacle is less than the first height, the robot may climb over the obstacle by advancing toward the obstacle at the first speed.

In addition, when the height of the obstacle is greater than or equal to the second height, the obstacle may be avoided.

Meanwhile, the method for controlling a robot according to the present invention may further include an approaching step of traveling forward toward the obstacle after the obstacle detection step.

Meanwhile, the method for controlling a robot according to the present invention may further include a reversing step of, when the pair of wheels come into contact with the obstacle in the approaching step, traveling backward so as to move away from the obstacle by a preset distance.

### [Advantageous Effects]

As described above, according to the robot of the present invention, various operations can be implemented and the function of the robot can be expanded or changed by rotating a single arm pivotally provided on both sides of the robot body.

In addition, there is an effect in that a functional module can be coupled to a lower portion of the robot body according to a user's command or a situation, and various functions can be performed through the functional module.

In addition, there is an effect in that the design of the robot can be changed, or a new function can be added, by replacing a robot mask that is detachably coupled to the robot body.

In addition, there is an effect in that, when the robot climbs over an obstacle, the robot can quickly climb over the obstacle by climbing over the obstacle directly or by reversing and then accelerating forward to climb over the obstacle, depending on the height of the obstacle.

In addition, since the robot reverses in a state where the pair of wheels are in contact with the obstacle, there is an advantage in that a direction perpendicular to the obstacle can be quickly determined and the robot can easily climb over the obstacle.

In addition, there is an advantage in that an area in which the robot cannot travel can be reduced, so that the robot can be used without spatial restrictions.

### [Brief Description of Drawings]

FIG. 1 is a perspective view for explaining a robot according to an embodiment of the present invention.
FIG. 2 is a front view of a robot according to an embodiment of the present invention.
FIG. 3 is a side view of a robot according to an embodiment of the present invention.
FIG. 4 is a rear view of a robot according to an embodiment of the present invention.
FIG. 5 is a plan view of a robot according to an embodiment of the present invention.
FIG. 6 is a bottom view of a robot according to an embodiment of the present invention.
FIG. 7 is a view for explaining a coupling relationship between a robot mask and a robot body in a robot according to an embodiment of the present invention.
FIG. 8 is a block diagram for explaining a control configuration of a robot according to an embodiment of the present invention.
FIG. 9 is a flowchart for explaining a method for controlling a robot according to an embodiment of the present invention.
FIG. 10 is a view for explaining a situation in which a robot according to an embodiment of the present invention detects an obstacle.
FIGS. 11 to 16 are views for explaining a situation in which a robot according to an embodiment of the present invention climbs over an obstacle.

### [Description of Embodiments]

Hereinafter, preferred embodiments of the present invention will be described in detail with reference to the accompanying drawings.

As the present invention may be subject to various modifications and have several embodiments, specific embodiments are illustrated in the drawings and will be described in detail in the detailed description. However, this is not intended to limit the present invention to specific implementation forms, and the present invention covers all modifications, equivalents, and alternatives falling within the scope of the appended claims.

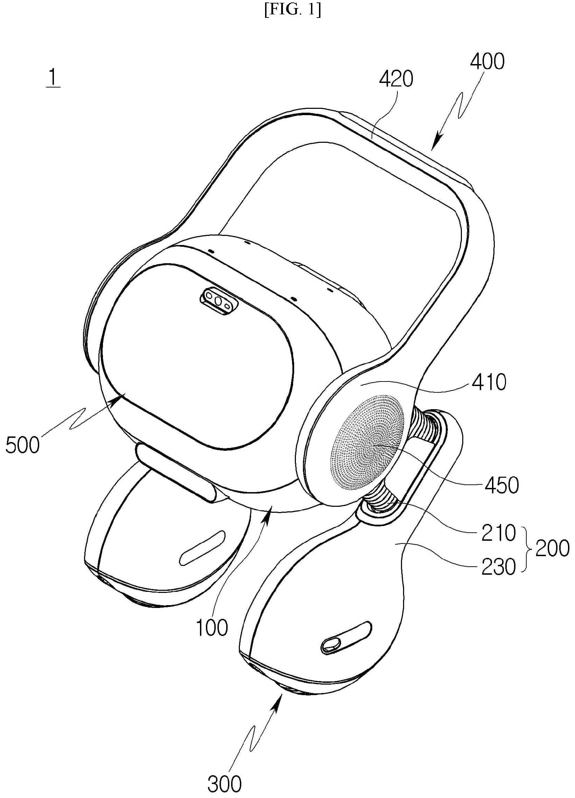

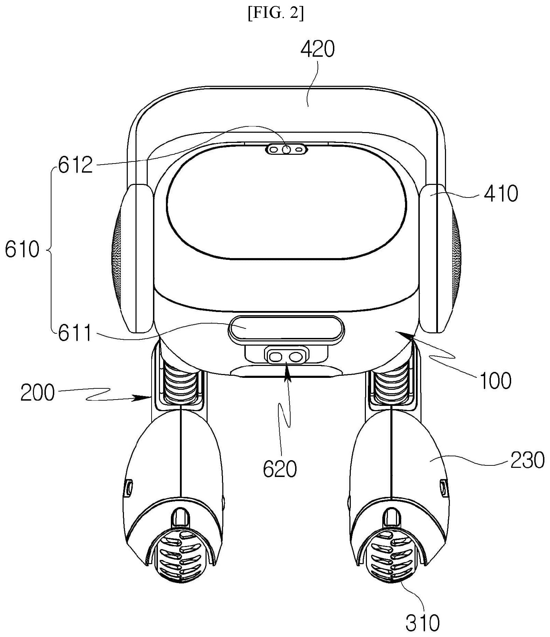

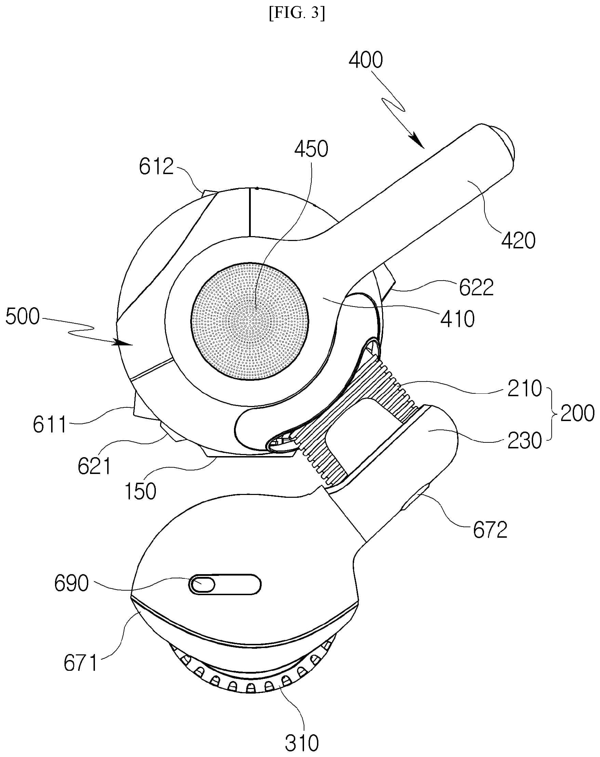

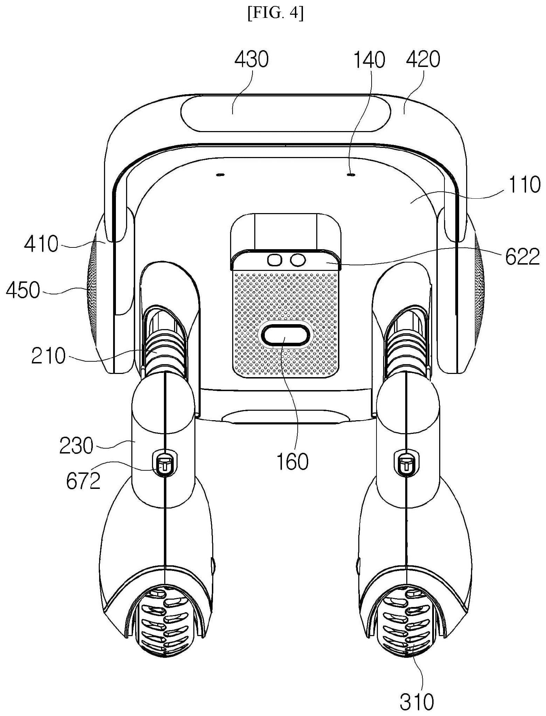

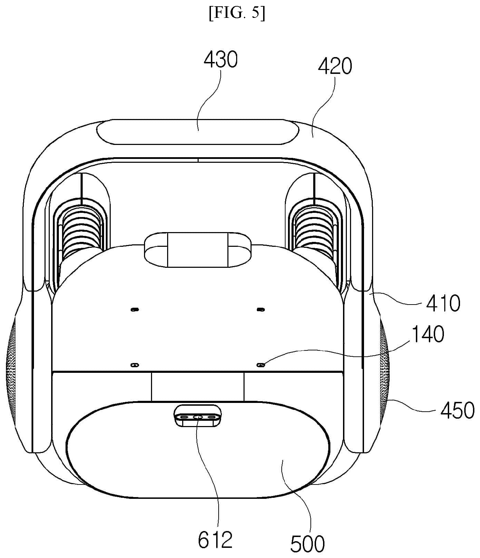

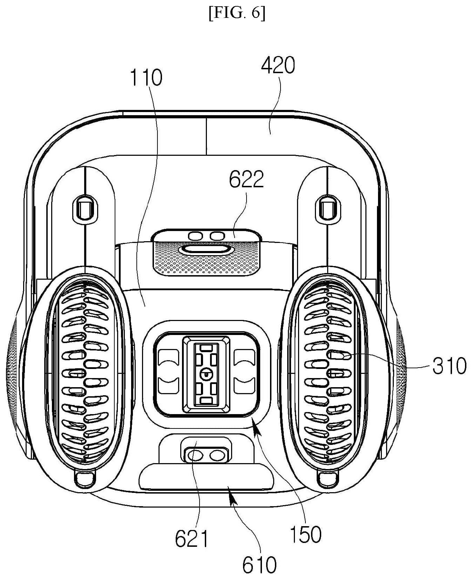

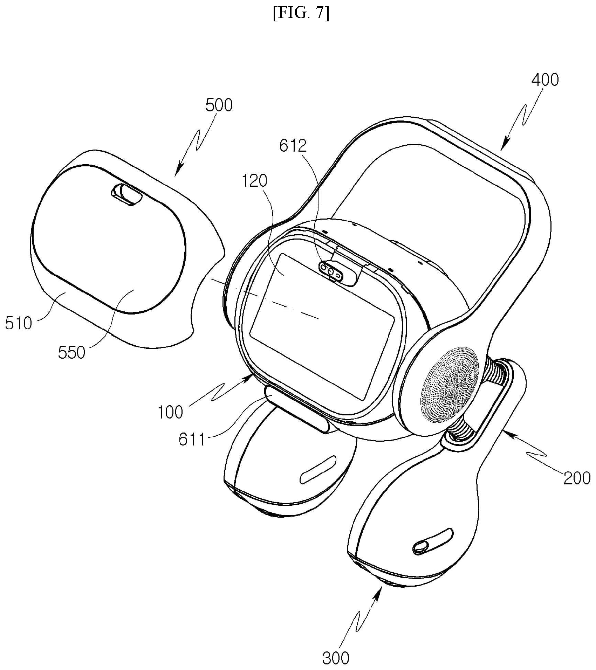

FIGS. 1 to 6 illustrate a perspective view, a front view, a side view, a rear view, a plan view, and a bottom view, respectively, for explaining a robot according to an embodiment of the present invention, and FIG. 7 illustrates a view for explaining a coupling relationship between a robot mask and a robot body in a robot according to an embodiment of the present invention.

A robot 1 according to an embodiment of the present invention will be described with reference to FIGS. 1 to 6.

The robot 1 according to an embodiment of the present invention is configured to be placed on a floor and move along a ground B. Accordingly, hereinafter, the vertical direction (up-and-down direction) will be defined and described based on a state in which the robot 1 is placed on the floor.

In addition, a side where an obstacle detection camera 610, which will be described later, is disposed is defined as a front of the robot 1. Furthermore, a direction opposite to the front is defined as a rear of the robot 1.

In an embodiment of the present invention, the "lowest portion" of each component may refer to a portion located at the lowest position in each component, or a portion closest to the floor, when the robot 1 according to the embodiment of the present invention is placed on the floor for use.

The robot 1 according to an embodiment of the present invention includes a robot body 100, a leg unit 200, a wheel unit 300, an arm 400, and a robot mask 500. At this time, the leg unit 200 is coupled to the robot body 100, and the wheel unit 300 is coupled to the leg unit 200. In addition, arms 400 are pivotally coupled to both side surfaces of the robot body 100. Further, the robot mask 500 is detachably coupled to the robot body 100.

### Robot Body

The robot body 100 in the robot 1 according to an embodiment of the present invention will be described with reference to FIGS. 1 to 7.

Various components forming the robot 1 may be coupled to the robot body 100. For example, the robot mask 500 may be detachably coupled to the robot body 100. Also, the arms 400 are pivotally coupled to the robot body 100. Specifically, the arms 400 are pivotally coupled to both end portions of the robot body 100. The robot body 100 may implement a standby posture for power saving or a recovery posture for standing up when fallen, through the arms 400. A lower portion of the robot body 100 may be detachably coupled to a functional module (not shown). The robot body 100 may perform additional functions by being coupled to the functional module (not shown).

Some components forming the robot 1 may be accommodated inside the robot body 100.

A body housing 110 may form the exterior of the robot body 100. An internal space of the body housing 110 may accommodate one or more motors including a suspension motor MS, one or more sensors, and a battery 800.

Although not shown, at least one bumper may be provided inside the body housing 110.

The bumper may be provided to be relatively movable with respect to the body housing 110. For example, the bumper may be coupled to the body housing 110 so as to be reciprocally movable along a front-rear direction of the body housing 110.

The bumper may be coupled along a part of or the entire front edge portion of the body housing 110. In addition, the bumper may be disposed at an inner rear side of the body housing 110.

With such a configuration, when the robot 1 collides with another object or a person, the bumper absorbs an impact applied to the robot body 100, thereby protecting the robot body 100 and components accommodated inside the robot body 100.

A pair of leg units 200 are coupled to the inside of the body housing 110. The pair of leg units 200 may pass through the body housing 110 to be exposed to the outside.

Specifically, an upper leg 210 may be rotatably coupled to the inside of the body housing 110. For example, a link frame (not shown) to which the upper leg 210 is link-coupled may be provided inside the body housing 110.

In addition, the suspension motor MS may be accommodated inside the body housing 110. For example, the suspension motor MS may be disposed on the link frame (not shown). The suspension motor MS may be connected to the upper leg 210.

A pair of leg guide holes may be formed in the body housing 110. For example, the pair of leg guide holes may be formed side by side along the front-rear direction of the body housing 110.

With such a configuration, the leg unit 200 can perform a rotational movement along the leg guide hole, and a rotational movement range of the leg unit 200 can be guided.

The body housing 110 may be formed in a shape having a horizontal width (or diameter) larger than a vertical height. For example, the body housing 110 may be formed in a shape similar to an ellipsoid.

Such a robot body 100 helps the robot 1 achieve a stable structure and provides a structure advantageous for maintaining balance while the robot 1 moves (travels).

The robot body 100 may be disposed vertically above a wheel 310, which will be described later. The load of the robot body 100 may be transmitted to the wheel 310 through the leg unit 200, and the wheel 310 may support the leg unit 200 and the robot body 100. With such a configuration, the wheel 310 can stably support the load of the robot body 100.

The robot body 100 may include a display 120. The display 120 may be coupled to the body housing 110. The display 120 may be formed in a flat plate shape. The display 120 may be disposed at a predetermined angle with respect to the ground. For example, the display 120 may be disposed at a position facing forward and upward. With such a configuration, when the robot 1 approaches a user, the display 120 is visible to the user looking at the robot 1.

Meanwhile, the display 120 may visually deliver information regarding an operating state of the robot 1 to the user.

The display 120 may be formed of any one of a Light Emitting Diode (LED), a Liquid Crystal Display (LCD), a Plasma Display Panel (PDP), and an Organic Light Emitting Diode (OLED).

Information such as operating time information of the robot 1 and power information of the battery 800 may be displayed on the display 120.

According to an embodiment, the display 120 may be an input unit 125. That is, a control command may be input to the display 120 from the user. For example, the display 120 may be a touch screen that visually shows the operating state and receives a control command from the user.

A facial expression of the robot 1 may be displayed on the display 120. Alternatively, eyes of the robot 1 may be displayed on the display 120. Through the shape of the face or the shape of the eyes displayed on the display 120, the current state of the robot 1 may be personified and expressed as emotions. For example, when the user returns home after going out, a smiling facial expression or a smiling eye shape may be displayed on the display 120. Accordingly, an effect can be obtained in which the user feels a sense of interaction with the robot 1.

A charging terminal may be disposed on the body housing 110. For example, the charging terminal may be disposed toward the ground. As an example, the charging terminal may be disposed to face the ground. As another example, the charging terminal may be disposed at a predetermined angle with respect to the ground. With such a configuration, when the robot 1 is coupled to a robot charging station (not shown), the charging terminal may come into contact with a terminal provided at the robot charging station (not shown).

The charging terminal may be electrically connected to the robot charging station (not shown). With such a configuration, the robot 1 may be supplied with power through the charging terminal. The power supplied to the charging terminal may be supplied to a battery 800. In addition, the robot 1 may receive an electrical signal through the charging terminal. The electrical signal transmitted through the charging terminal may be received by a control unit 700.

A microphone 140 may be disposed on the body housing 110. A plurality of microphones 140 may be disposed on the body housing 110. For example, four microphones 140 may be disposed on an upper portion of the body housing 110. With such a configuration, the microphone 140 can detect sound coming from various directions, and can detect the position of a sound source.

A module coupling portion 150 may be disposed at a lower portion of the body housing 110. The module coupling portion 150 is detachably coupled to a functional module (not shown). Specifically, the module coupling portion 150 may be selectively coupled to or separated from the functional module (not shown).

As an example, the module coupling portion 150 may be configured in the form of an electromagnet, and may selectively apply a magnetic force (attractive force) to the functional module (not shown) according to the supply of power. As another example, the module coupling portion 150 may be configured to be hook-coupled with a coupling portion of the functional module (not shown). In this case, the coupling force between the robot body 100 and the functional module (not shown) can be strengthened.

At this time, a connection terminal may be disposed on the module coupling portion 150. With such a configuration, the module coupling portion 150 can be coupled at an accurate position to a detachable portion made of a metal material (or an electromagnet) provided on the functional module (not shown), and there is an effect of guiding the connection terminal to come into contact at an accurate position with a corresponding terminal provided on the functional module (not shown).

The connection terminal may be electrically connected to the functional module (not shown). The connection terminal may come into contact with and be electrically connected to a corresponding terminal provided on the functional module (not shown).

With such a configuration, power of the robot body 100 can be supplied to the functional module (not shown) through the connection terminal. In addition, the robot body 100 can transmit and receive electrical signals to and from the functional module (not shown) through the connection terminal.

Meanwhile, a detailed description of the functional module (not shown) will be given later.

An operation unit 160 may be disposed on the body housing 110. For example, the operation unit 160 may be disposed at the rear of the body housing 110.

The operation unit 160 can be operated by a user, and the power of the robot 1 can be turned on/off by operating the operation unit 160.

The operation unit 160 may be provided to be pushable with respect to the body housing 110, or, according to an embodiment, may be provided to pivot in the left-right direction.

For example, the operation unit 160 may be a button. Accordingly, when the power of the robot 1 is off, if a user pushes the operation unit 160 so that the operation unit 160 is pressed, the power of the robot 1 can be turned on. In addition, when the power of the robot 1 is on, if a user pushes the operation unit 160 so that the operation unit 160 is pressed, the power of the robot 1 can be turned off.

Meanwhile, an obstacle detection camera 610 may be disposed at the front of the body housing 110. According to an embodiment, a plurality of obstacle detection cameras 610 may be disposed. For example, a first detection camera 611 may be disposed at a front lower portion of the body housing 110, and a second detection camera 612 may be disposed at a front upper portion of the body housing 110. At this time, the obstacle detection camera 610 may be disposed on a centerline passing through a center of the body housing 110 in a left-right direction. With such a configuration, the obstacle detection camera 610 may detect an object or a person positioned in front of the robot 1.

In addition, an IR sensor 620 may be disposed on the body housing 110. According to an embodiment, a plurality of IR sensors 620 may be disposed. For example, a first IR sensor 621 may be disposed at a front lower portion of the body housing 110, and a second IR sensor 622 may be disposed at the rear of the body housing 110. With such a configuration, the IR sensor 620 can detect the position of a light source disposed in various directions.

The IR sensor 620 may be disposed close to the obstacle detection camera 610. For example, the first IR sensor 621 may be disposed directly below the first obstacle detection camera 611.

With such an arrangement, the IR sensor 620 can detect light irradiated by a lamp of a functional module (not shown) or a robot charging station (not shown), and when the robot body 100 approaches the lamp, the obstacle detection camera 610 can detect the shape of the functional module (not shown) or the robot charging station (not shown).

### Leg Unit

A leg unit 200 in the robot 1 according to an embodiment of the present invention will be described with reference to FIGS. 1 to 7.

The leg unit 200 is coupled to the robot body 100 and is capable of supporting the robot body 100. For example, a pair of leg units 200 are provided and respectively coupled to the inside of the body housing 110. The pair of leg units 200 may be disposed symmetrically (line-symmetrically) with respect to each other. At this time, at least a portion of the leg unit 200 is disposed closer to the ground than the robot body 100 is. Accordingly, the robot body 100 can travel in a state of standing on the ground by the pair of leg units 200. That is, gravity applied to the robot body 100 can be supported by the leg unit 200, and the height of the robot body 100 can be maintained.

The leg unit 200 includes an upper leg 210 and a lower leg 230. At this time, the upper leg 210 is rotatably coupled to the robot body 100 and the lower leg 230.

Meanwhile, although not shown, the upper leg 210 includes a first link and a second link. At this time, the first link and the second link are rotatably coupled to the robot body 100 and the lower leg 230, respectively. That is, the first link and the second link are link-coupled to the robot body 100 and the lower leg 230, respectively.

The first link and the second link are disposed inside an upper link cover and are not exposed to the outside. The upper link cover is formed in a kind of bellows shape, accommodates the first link and the second link therein, and may be provided so that its length can be extended and contracted according to the rotation of the upper leg 210.

The first link is link-coupled to the inner left and right sides of the robot body 100.

The first link is connected to a suspension motor MS. For example, the first link may be connected to a shaft of the suspension motor MS directly or through a gear. With such a configuration, the first link receives driving force from the suspension motor MS.

The first link is formed in a frame shape, wherein one side in a longitudinal direction is connected to the suspension motor MS, and the other side in the longitudinal direction is coupled to the lower leg 230. At this time, the one side of the first link connected to the suspension motor MS may be disposed further from the ground than the other side coupled to the lower leg 230.

One side of the first link is coupled to a leg support portion (not shown) provided inside the body housing 110. The first link may be rotatably coupled to the leg support portion. For example, one side of the first link may be formed in a disk shape or a circular plate shape. Accordingly, one side of the first link may pass through the leg support portion to be connected to the suspension motor MS.

One side of the first link is connected to the suspension motor MS. For example, the one side of the first link may be fixedly coupled to a shaft of the suspension motor MS. With such a configuration, when the suspension motor MS is driven, the one side of the first link may be rotated in conjunction with the rotation of the shaft of the suspension motor MS.

The other side of the first link is rotatably coupled to the lower leg 230. For example, a through-hole may be formed at the other side of the first link. A shaft may be rotatably coupled through the through-hole. Both longitudinal end portions of the shaft may be coupled to the lower leg 230.

With such a configuration, the shaft may serve as an axis about which the first link and/or the lower leg 230 are rotated. Accordingly, the first link and the lower leg 230 may be connected to be relatively rotatable.

Although not shown, the leg unit 200 may further include a gravity compensation unit. The gravity compensation unit compensates for the robot body 100 descending vertically downward due to gravity. That is, the gravity compensation unit provides force to support the robot body 100.

For example, the gravity compensation unit may be a torsion spring. The gravity compensation unit may be wound to surround an outer circumferential surface of the first link. One end portion of the gravity compensation unit may be inserted into and fixedly coupled to the first link, and the other end portion of the gravity compensation unit may be inserted into and fixedly coupled to the lower leg 230.

The gravity compensation unit applies force (rotational force) in a direction in which an angle between the first link and the lower leg 230 increases. For example, both end portions of the gravity compensation unit are pre-contracted so as to apply a restoring force in a direction in which an included angle between the first link and the lower leg 230 increases. Accordingly, even when gravity is applied to the robot body 100 while the robot 1 is placed on the ground, the included angle between the first link and the lower leg 230 can be maintained within a predetermined angle range.

With such a configuration, even if the suspension motor MS is not driven, the robot body 100 can be prevented from descending toward the ground. Therefore, there is an effect of maintaining the height of the robot body 100 at a predetermined distance or more from the ground while preventing energy loss caused by driving the suspension motor MS by means of the gravity compensation unit.

The second link is link-coupled to the inner left and right sides of the robot body 100. For example, the second link may be link-coupled to a leg support portion (not shown) provided inside the body housing 110. That is, the second link may be coupled together to the leg support portion (not shown) to which the first link is coupled.

The second link is formed in a frame shape, wherein one side in a longitudinal direction is coupled to the leg support portion (not shown), and the other side in the longitudinal direction is coupled to the lower leg 230.

A wire may be accommodated in the second link. For example, a space capable of accommodating a wire may be formed inside the second link. Accordingly, power from the battery 800 can be supplied to the wheel unit 300 through the wire.

One side of the second link is rotatably coupled to the leg support portion. For example, although not shown, a shaft coupled to the leg support portion may be coupled through the one side of the second link. A hollow may be formed in the shaft. The wire may pass through the hollow. With such a configuration, the wire for supplying power from the battery 800 to a wheel motor MW can be prevented from being exposed to the outside.

The other side of the second link is rotatably coupled to the lower leg 230. Specifically, the other end portion of the second link is rotatably coupled to the lower leg 230 through a shaft. For example, the other side of the second link may be formed in a disk shape, and the shaft may be coupled therethrough. In addition, both longitudinal end portions of the shaft may be coupled to the lower leg 230. With such a configuration, the shaft may serve as an axis about which the second link and/or the lower leg 230 are rotated. Accordingly, the second link and the lower leg 230 may be connected to be relatively rotatable.

The lower leg 230 is link-coupled to the first link and the second link, and is coupled to the wheel unit 300.

The lower leg 230 is formed in a frame shape, wherein one side in a longitudinal direction is coupled to the first link and the second link, and the other side in the longitudinal direction is coupled to the wheel unit 300.

One side in the longitudinal direction of the lower leg 230 is link-coupled to the first link and the second link. For example, a space may be formed at one side of the lower leg 230 so as to accommodate the first link and the second link. That is, the one side of the lower leg 230 may be formed in a shape of a pair of parallel frames, and the first link and the second link may be accommodated in a space between the pair of parallel frames.

Here, two shafts may be disposed side by side between the pair of frames. That is, both end portions of each of the two shafts may be coupled to the pair of frames. Also, each of the shafts may pass through the first link and the second link. At this time, the first link may be disposed at a front lower side of the second link. That is, the shaft passing through the first link may be disposed closer to the wheel 310 than the shaft passing through the second link.

Accordingly, the first link and the second link may be coupled to be relatively rotatable with respect to the lower leg 230, respectively.

The other side in the longitudinal direction of the lower leg 230 is coupled to the wheel unit 300. The other side in the longitudinal direction of the lower leg 230 may be formed to cover at least a portion of the wheel 310. For example, the other side in the longitudinal direction of the lower leg 230 may be formed to cover a rotation center of the wheel 310, and a space for rotatably accommodating the wheel 310 may be formed therein.

In addition, a wheel motor MW may be accommodated inside the other side in the longitudinal direction of the lower leg 230.

With such a configuration, the wheel 310 and the wheel motor MW can be accommodated at the other side in the longitudinal direction of the lower leg 230, and the wheel 310 can be rotatably coupled thereto.

Meanwhile, a sensor capable of measuring a distance to the ground may be provided at the other side in the longitudinal direction of the lower leg 230. Specifically, a cliff sensor 670 may be disposed on the lower leg 230. For example, a first cliff sensor 671 may be disposed at a front lower end of the lower leg 230, and a second cliff sensor 672 may be disposed at a rear upper side of the lower leg 230. With such a configuration, the distance between the lower leg 230 and the wheel 310, and the ground B, can be measured. In addition, it is also possible to calculate an angle between the lower leg 230 and the ground through a difference in distance between the first cliff sensor 671 and the second cliff sensor 672.

Meanwhile, although not shown, the leg unit 200 may be provided with a stopper. The stopper may be disposed inside the body housing 110. The stopper may be disposed adjacent to a rotation coupling portion 410 of the arm 400. For example, the stopper may be disposed inside an inner circumferential surface of the rotation coupling portion 410 formed in a cylindrical shape.

As an example, the stopper may be disposed on a leg support portion (not shown). As another example, the stopper may be disposed on the first link.

The stopper may be formed in a shape protruding toward the rotation coupling portion 410. The stopper may be in contact with and supported by a rotation protrusion (not shown) of the arm 400, which will be described later. For example, the rotation protrusion protruding from the inner circumferential surface of the rotation coupling portion 410 rotates together with the rotation of the arm 400, and when the arm 400 rotates to a predetermined position, it may come into contact with the stopper.

With such a configuration, the stopper can limit a rotation angle of the arm 400 when the arm 400 rotates.

Looking at the overall balance provided by the leg unit 200, the first link and the second link are rotatably coupled to a link frame (not shown) provided inside the robot body 100, and the first link and the second link are link-coupled to the lower leg 230. That is, the robot 1 has a structure that supports the robot body 100 through a four-bar linkage consisting of the link frame (not shown), the first link, the second link, and the lower leg 230.

In the leg unit 200, the gravity compensation unit generates a restoring force in a direction of lifting the robot body 100. Accordingly, even in a state where the suspension motor MS is not driven, the pair of leg units 200 can maintain a state in which the robot body 100 is lifted by a predetermined height from the ground.

Meanwhile, in the robot 1 according to an embodiment of the present invention, when at least one of the pair of wheels 310 is lifted to climb over an obstacle, or when the height of the robot body 100 is lowered for charging or the like, balance can be maintained by driving the suspension motor MS.

When the suspension motor MS is driven, the first link rotates about a motor coupling portion as an axis, and a link coupling portion is moved upward. Then, the lower leg 230 is moved according to the rotation of the first link. Further, the second link is pushed by the lower leg 230 to perform a rotational movement. As a result, one end portion of the lower leg 230 moves backward, and the other end portion of the lower leg 230 can move upward.

With such a configuration, even if the wheel 310 is moved in the vertical direction, the movement range of the wheel 310 in the front-rear direction can be limited. Accordingly, the robot 1 can stably maintain balance.

Therefore, according to the robot 1 of the present invention, there is an effect of being able to climb over obstacles of various heights using the four-bar linkage structure.

### Wheel Unit

A wheel unit 300 in the robot 1 according to an embodiment of the present invention will be described with reference to FIGS. 1 to 8.

The wheel unit 300 is rotatably coupled to the leg unit 200 and is capable of moving the robot body 100 and the leg unit 200 by rolling on the ground.

The wheel unit 300 includes a wheel 310 that performs rolling travel on the ground while in contact with the ground.

The wheel 310 is provided to have a predetermined radius and a predetermined width along an axial direction. When the robot 1 is viewed from the front, at least a portion of the robot body 100 and the leg unit 200 may be disposed vertically above the wheel 310.

Although not shown, the wheel 310 may include a wheel frame formed in a circular shape. The wheel frame may be formed in a cylindrical shape in which one side facing a shaft of a wheel motor MW is open. Through this, the weight of the wheel frame can be reduced.

However, when the wheel frame is formed in a cylindrical shape, the overall rigidity of the wheel frame may be reduced. Considering this, ribs (not shown) for reinforcing rigidity may be formed on the inner and outer surfaces of the wheel frame, respectively.

A tire is coupled to an outer circumferential surface of the wheel frame. The tire may be formed in an annular shape having a diameter that allows it to be fitted onto the outer circumferential surface of the wheel frame.

Grooves of a predetermined pattern may be recessed into an outer circumferential surface of the tire so as to improve the traction of the tire.

In one embodiment, the tire may be formed of a rubber material having elasticity.

The wheel motor MW may provide driving force to the wheel 310. The wheel motor MW may generate rotational force by receiving power from the battery 800.

The wheel motor MW may be accommodated inside the other side of the lower leg 230. Alternatively, the wheel motor MW may be accommodated inside the wheel 310. In addition, the shaft of the wheel motor MW may be coupled to the wheel 310. That is, the wheel motor MW may be an in-wheel motor.

With such a configuration, when the wheel motor MW is driven, the wheel 310 can roll along the ground while rotating, and the robot 1 can move along the ground.

### Arm

An arm 400 in the robot 1 according to an embodiment of the present invention will be described with reference to FIGS. 1 to 7.

The arm 400 may be pivotally coupled to both side surfaces of the robot body 100. For example, the arm 400 may refer to a rotating body that is coupled to both longitudinal (axial) end portions of the ellipsoidal robot body 100 and rotates about the both longitudinal end portions of the robot body 100 as a single rotation axis.

Specifically, the arm 400 includes a rotation coupling portion 410 and a connection portion 420.

The rotation coupling portion 410 may be rotatably coupled to both side surfaces of the robot body 100. A pair of rotation coupling portions 410 may be provided and coupled to both left and right sides of the robot body 100 so as to be relatively rotatable. At this time, the pair of rotation coupling portions 410 may rotate in conjunction with each other. That is, the pair of rotation coupling portions 410 may rotate simultaneously with each other, and the magnitude of the rotation angle may also be the same. However, when viewed based on the robot body 100, the rotation directions of the pair of rotation coupling portions 410 may be opposite to each other. That is, when viewed based on the robot body 100, if the rotation coupling portion 410 on one side rotates in a clockwise direction, the rotation coupling portion 410 on the other side may rotate in a counter-clockwise direction.

The rotation coupling portion 410 may be formed in a shape capable of covering both left and right end portions of the robot body 100. For example, the rotation coupling portion 410 may be formed in a cylindrical shape having a predetermined thickness. At this time, both left and right end portions of the robot body 100 may be disposed to face a rotation center of the rotation coupling portion 410.

That is, describing the state in which the rotation coupling portion 410 is coupled to the robot body 100, assuming that the robot body 100 is a human face, the rotation coupling portion 410 may have a shape similar to a pair of earmuffs or earpieces of headphones.

The arm motor MA may be disposed inside the body housing 110. Alternatively, according to an embodiment, it is also possible for the arm motor MA to be disposed inside the rotation coupling portion.

The arm motor MA is connected to the arm 400 to provide driving force to the arm 400. More specifically, a shaft of the arm motor MA or a final output end of a gear is connected to the rotation coupling portion 410. For example, the shaft of the arm motor MA may be connected to a reduction gear, and the reduction gear may be connected to a driven gear.

The reduction gear consists of at least one or more gears and transmits rotational force applied from the arm motor MA to the driven gear, while reducing a rotational speed of the driven gear through a gear ratio. Through this, precise rotation of the arm 400 can be controlled, and the arm 400 can be configured to provide a relatively large force.

The driven gear may be coupled to the rotation coupling portion 410 to be integrally rotated therewith. The driven gear may be meshed with an output end of the reduction gear to receive rotational power from the arm motor MA.

With such a configuration, when the arm motor MA is operated, the rotation coupling portion 410 can be rotated.

Two arm motors MA may be provided and respectively connected to the pair of rotation coupling portions 410. As another example, one arm motor MA may be provided and connected to any one of the rotation coupling portions 410.

With such a configuration, when the arm motor MA is operated, the pair of rotation coupling portions 410 rotate together in conjunction with each other, and the connection portion 420 rotates together according to the rotation of the rotation coupling portion 410. That is, according to the present invention, the rotation coupling portion 410 and the connection portion 420 of the arm 400 can be integrally rotated about an arm shaft of the rotation coupling portion 410 as a rotation axis.

Meanwhile, a speaker 450 may be disposed outside the rotation coupling portion 410. That is, the speaker 450 may be disposed on each of the pair of rotation coupling portions 410 in a direction opposite to the direction in which the robot body 100 is disposed. Accordingly, the speakers 450 may be respectively disposed at positions covering both left and right sides of the body housing 110.

The speaker 450 can output information of the robot 1 as sound. A source of the sound output by the speaker 450 may be sound data pre-stored in the robot 1. For example, the pre-stored sound data may be voice data of the robot 1. For example, the pre-stored sound data may be a notification sound guiding the status of the robot 1. Meanwhile, the source of the sound output by the speaker 450 may be sound data received through a communication unit 710.

Meanwhile, in the case of a conventional robot, a pair of arms is provided on both sides of a body, similar to human arms, to move objects or perform specific tasks.

However, when a pair of arms is provided as described above, each arm may move independently, and accordingly, loads applied to both sides of the robot may vary. Therefore, a problem may occur in which the robot tilts to one side and falls.

In addition, when the robot has fallen, an operation of the arms supporting themselves against the ground to stand up may be attempted. However, since the arms on both sides rotate independently to support themselves against the ground, there is a limitation in that balance may be lost during the process of the robot standing up, causing it to fall again.

On the other hand, in the case of a robot that carries objects or performs specific tasks through a single arm, there is a limitation in that the load of the objects being carried or the impact that may occur during task performance is concentrated only on the single arm, which may cause damage to the arm.

To solve this, the robot 1 according to an embodiment of the present invention is configured in a form in which a single arm 400 is rotatably coupled to both sides of the robot body 100.

The connection portion 420 may connect the pair of rotation coupling portions 410 to each other. The connection portion 420 may connect the pair of rotation coupling portions 410 covering both left and right sides of the robot body 100 so that they rotate together.

The connection portion 420 connects the pair of rotation coupling portions 410 to each other and may be formed in a shape rotatable about the robot body 100. Specifically, the connection portion 420 may be formed in a frame shape in which both longitudinal end portions are bent and extended. At this time, both end portions of the connection portion 420, which are bent and extended, may be disposed parallel to each other and connected to the pair of rotation coupling portions 410. As an example, the connection portion 420 may be formed in an '∩' shape. As another example, the connection portion 420 may also be formed in an arch shape.

Describing a state in which the arm 400 is coupled to the robot body 100, assuming that the robot body 100 is a human face, the connection portion 420 may have a shape similar to a headband of headphones. That is, assuming that the robot body 100 is a human face, the arm 400 may appear in a shape similar to headphones.

With such a configuration, the pair of rotation coupling portions 410 are integrally connected to the connection portion 420, so that the entire arm 400 can rotate together about the rotation coupling portion 410 as a rotation center.

Meanwhile, a rotation radius of the arm 400 may be longer than a maximum length of the first link and shorter than a maximum length of the leg unit 200. Specifically, a shortest distance from the rotation center of the rotation coupling portion 410 to an outer end portion of the connection portion 420 may be longer than the maximum length of the first link and shorter than the maximum length of the leg unit 200.

With such a configuration, when the arm 400 is rotated, at least a portion of the arm 400 can be disposed closer to the ground than the first link is.

When a user's specific command or a preset situation does not occur, an outer end portion of the arm 400 may be disposed farther from the ground than the robot body 100 is. With such a configuration, a user can easily transport the robot 1 by holding the arm 400. That is, the arm 400 can perform the function of a handle that the user can grip.

Also, when a user's specific command or a preset situation does not occur, the arm 400 may be disposed further rearward than the robot mask 500. This is to prevent the robot mask 500 from being obscured by the arm 400 when the user looks at the robot 1.

Meanwhile, when a user's specific command or a preset situation occurs, the arm 400 can implement various functions by rotating.

As an example, the robot 1 can implement a scooched-down posture. For this purpose, the robot 1 can rotate the arm 400 from an upper side of the robot body 100, past the rear, to a rear lower side of the robot body 100. Together with this, or prior to the rotation of the arm 400, the leg unit 200 may be moved to lower the posture of the robot 1. Accordingly, even if the operation of the wheel motor MW is stopped so that the wheel 310 does not rotate, the robot 1 may tilt backward such that the pair of wheels 310 and a lower end portion of the arm 400 come into contact with the ground. As a result, through the above-described operation of the robot 1, the single arm 400 and the pair of wheels 310 can come into contact with the ground, thereby supporting the robot body 100 at three points. Through this, a standby posture for reducing power consumption can be assumed.

As another example, the robot 1 can stand up by pressing against the ground through the arm 400 in a state where it has fallen. For this purpose, the robot 1 can rotate the arm 400 toward the front of the robot body 100, and together with this, the wheel 310 can be rotated in a direction in which the robot 1 moves forward. That is, the pair of wheels 310 may be rotated in a direction in which the distance to the arm 400 decreases. As a result, according to the robot 1 of the present invention, since the single arm can press against the ground and stand up, it is possible to prevent the robot 1 from shaking or falling again in the process of standing up, and the power consumed in the process of implementing the standing-up operation can be minimized.

Meanwhile, according to an embodiment, the arm 400 of the robot 1 may further include a detachable portion 430 for coupling with a functional module (not shown).

The detachable portion 430 may be disposed on the connection portion 420. Specifically, the detachable portion 430 may be disposed on an outer surface of the connection portion 420. Here, the outer surface of the connection portion 420 may refer to a surface disposed in a direction opposite to a direction in which the connection portion 420 faces the robot body 100.

With such a configuration, the detachable portion 430 may be exposed to the outside about the robot body 100 so as to be easily brought into contact with an object approaching from the outside of the robot 1.

The detachable portion 430 may be detachably coupled to the functional module (not shown). Specifically, the detachable portion 430 may be selectively coupled to or separated from the functional module (not shown).

The detachable portion 430 may be configured in the form of an electromagnet, and may selectively apply a magnetic force (attractive force) to the functional module (not shown) according to the supply of power.

For example, the detachable portion 430 may be configured in the form of an electromagnet. With such a configuration, the detachable portion 430 can form a uniform magnetic field over a wide area, and can be stably coupled to the functional module (not shown).

### Robot Mask

As shown in FIG. 7, the robot 1 according to an embodiment of the present invention may further include a robot mask 500.

The robot mask 500 is detachably coupled to the robot body 100 and is capable of covering the display 120. The robot mask 500 is coupled to the robot body 100 to form an exterior of the robot 1.

The robot mask 500 includes a mask body portion 510 and a window 550.

The mask body portion 510 forms the exterior of the robot mask 500. For example, based on a state in which the robot mask 500 and the robot body 100 are coupled to each other, an outer surface of the mask body portion 510 exposed to the outside may be formed in a curved shape having a predetermined curvature.

In addition, an inner surface of the mask body portion 510 facing the robot body 100 may be formed in a shape corresponding to the shape of the robot body 100. For example, the inner surface of the mask body portion 510 may be formed in a flat shape corresponding to the shape of the display 120, and side walls may protrude from the outer periphery thereof so as to accommodate a portion of the body housing 110. Accordingly, the inner surface of the mask body portion 510 may be formed in the shape of an elliptical flat surface and a side wall surrounding the flat surface.

Although not shown, a magnet for coupling may be disposed on the mask body portion 510.

For example, at least one magnet may be disposed on the side wall protruding from the inner surface of the mask body portion 510.

In addition, the magnet generates a magnetic force (attractive force) so as to be detachably coupled to the robot body 100. With such a configuration, the magnet can couple the body housing 110 and the mask body portion 510 through magnetic force, and can separate the body housing 110 and the mask body portion 510 when a user applies an external force of a predetermined magnitude or more.

Although not shown, a mask communication unit may be disposed on the mask body portion 510 to communicate with a communication unit 710 provided on the robot body 100.

The communication unit of the robot mask 500 may support wireless communication with the robot body 100. A short-range communication module may be provided as a wireless communication module for supporting the wireless communication.

The short-range communication may be, for example, Near Field Communication (NFC) or the like.

Information about the shape of the robot mask 500 and a function provided in the robot mask 500 may be transmitted to the robot body 100 through the communication unit of the robot mask 500. In addition, the communication unit of the robot mask 500 may receive a control command from the control unit 700 provided on the robot body 100.

Meanwhile, the robot mask 500 may be supplied with power from the robot body 100. Although not shown, a terminal that can be electrically connected to the robot body 100 may be provided on the robot mask 500.

Meanwhile, the robot mask 500 according to an embodiment of the present invention may include a window 550 that exposes an image displayed on the display 120 to the outside when coupled to the robot body 100.

The window 550 may be disposed on the mask body portion 510. Specifically, the window 550 is disposed through the mask body portion 510 and may be disposed at a position facing the display 120 when the robot mask 500 is coupled to the robot body 100.

The window 550 may be formed of a material through which light can pass. For example, the window 550 may be formed of a transparent material.

Meanwhile, when the robot mask 500 is coupled to the robot body 100, a face and facial expressions may be displayed on the display 120.

The robot 1 may display facial features such as eyes, a nose, and a mouth on the display 120 to make a user feel as if the robot is expressing emotions.

The robot 1 may display a preset image on the display 120 to depict a facial expression, so that the user perceives the robot as expressing an emotion.

For example, when the user returns home, the robot 1 may display a smiling face on the display 120 to indicate gladness.

As another example, when the robot 1 detects a cliff and escapes the risk of falling, the robot 1 may display a surprised face and a surprised eye expression on the display 120.

As another example, when the user calls the robot 1, the robot 1 may display a facial expression of curiosity gazing at the user on the display 120. The robot 1 may be configured to detect a call and respond thereto when the user calls it using a specific utterance.

As another example, when the robot 1 cannot understand a user's command, the robot 1 may display a facial expression of curiosity together with a symbol such as "?" on the display 120.

As another example, when the user continuously commands the robot 1 to perform services, the robot 1 may display a tired facial expression together with a picture representing sweat.

As another example, when the user does not give a command to the robot 1 for a preset time or more, a sleeping facial expression may be displayed.

In addition to the examples described above, the robot 1 can express various emotions on the display 120, and expressions that can be displayed may be improved or added through a software update or the like.

In this manner, the robot 1 can provide a pet robot service that displays emotions to the user and interacts with the user, which has an effect of providing emotional stability to the user.

As described above, the robot 1 may express emotions visually by showing facial expressions on the display 120 and may also express emotions through voice output from the speaker 450.

For example, sounds such as laughing or surprised sounds may be output in correspondence with the facial expressions displayed on the display 120.

In addition, as described above, the robot 1 may express emotions visually by showing facial expressions on the display 120 and may also express emotions through rotation of the arm 400.

For example, the robot 1 may express emotions by shaking the arm 400 while displaying a smiling facial expression on the display 120.

Meanwhile, the display 120 may change a graphic displayed thereon in the state where the robot mask 500 is coupled, according to the shape of the robot mask 500.

Specifically, the control unit 700 of the robot 1 may receive information about the shape of the mask 500 through a mask communication unit 530. For example, information about the shape may be recorded in each robot mask 500, and the control unit 700 may receive the information about the shape of the robot mask 500 from the mask communication unit 530 of the robot mask 500. At this time, a memory 720 stores Graphic User Interface (GUI) information corresponding to the shape of each mask 500. The control unit 700 may control the display 120 to display a GUI corresponding to the shape of the robot mask 500. Accordingly, in the state in which the robot mask 500 and the robot body 100 are coupled, the display 120 may display a GUI, and the GUI displayed on the display 120 may be viewed from the outside of the robot mask 500 through the window 550.

Meanwhile, a user may directly select a GUI through the input unit 125. The control unit 700 may control the display 120 to display the GUI input by the user.

With such a configuration, the user can customize the appearance of the robot 1 by purchasing a robot mask 500 that suits the user's taste or selecting a GUI that the user prefers.

### Control Configuration

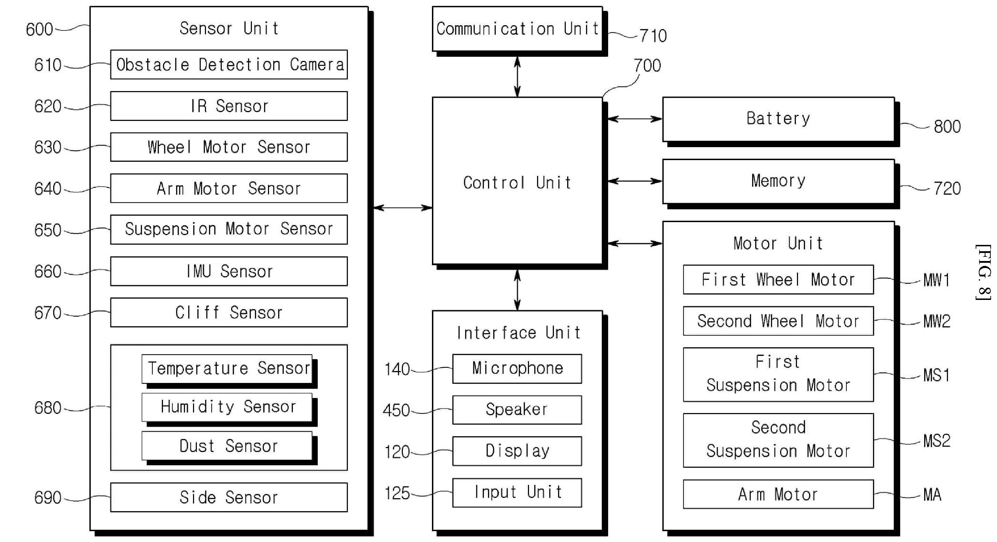

FIG. 8 is a block diagram for explaining a control configuration of a robot according to an embodiment of the present invention.

Referring to FIGS. 1 to 8, the robot 1 according to an embodiment of the present invention may include a sensor unit 600, a control unit 700, a communication unit 710, a memory 720, a battery 800, a motor unit, and an interface unit.

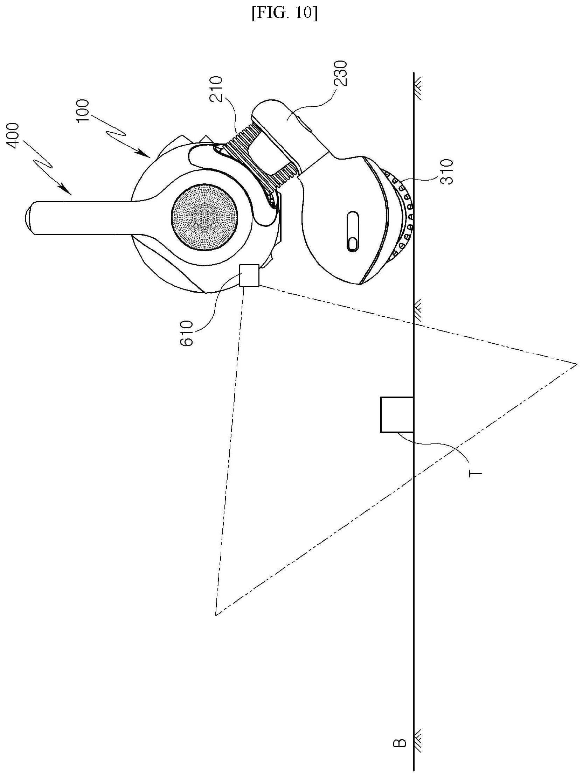

The components shown in the block diagram of FIG. 10 are not essential in implementing the robot 1, and thus the robot 1 described in the present specification may have more or fewer components than the components listed above.

First, the control unit 700 may control the overall operation of the robot 1. The control unit 700 may control the robot 1 to perform various functions according to setting information stored in the memory 720, which will be described later.

The control unit 700 may be disposed on the robot body 100. More specifically, the control unit 700 may be mounted and provided on a Printed Circuit Board (PCB) disposed inside the body housing 110.

The control unit 700 may include all types of devices capable of processing data, such as a processor. Here, the "processor" may refer to a data processing device embedded in hardware having a physically structured circuit to perform functions expressed by codes or instructions included in, for example, a program. As an example of such a data processing device embedded in hardware, it may encompass processing devices such as a microprocessor, a Central Processing Unit (CPU), a processor core, a multiprocessor, an Application-Specific Integrated Circuit (ASIC), and a Field Programmable Gate Array (FPGA), but the scope of the present invention is not limited thereto.

The control unit 700 may receive information about an external environment of the robot 1 from at least one of the components of the sensor unit 600, which will be described later. In this case, the information about the external environment may be, for example, information such as temperature, humidity, and the amount of dust in a room where the robot 1 travels. Alternatively, for example, it may be cliff information. Alternatively, for example, it may be indoor map information. Of course, the information about the external environment is not limited to the above-described examples.

The control unit 700 may receive information about a current state of the robot 1 from at least one of the components of the sensor unit 600, which will be described later. In this case, the current state may be, for example, tilt information of the robot body 100. Alternatively, for example, it may be information about a separation state between the wheel 310 and the ground. Alternatively, for example, it may be position information of the wheel motor MW. Alternatively, for example, it may be position information of the suspension motor MS. Of course, the information about the current state of the robot 1 is not limited to the above-described examples.

The control unit 700 may transmit a driving control command to at least one of the components of the motor unit, which will be described later. For example, the control unit 700 may control rotation of the wheel motor MW for the traveling of the robot 1. Alternatively, for example, the control unit 700 may control rotation of the wheel motor MW to maintain a horizontal posture of the robot 1. Alternatively, for example, the control unit 700 may control rotation of the suspension motor MS to maintain a horizontal posture of the robot 1.

The control unit 700 may receive a user's command through at least one of the components of the interface unit, which will be described later. For example, the command may be a command for turning the robot 1 on/off. Alternatively, for example, the command may be a command for manually controlling various functions of the robot 1.

The control unit 700 may output information related to the robot 1 through at least one of the components of the interface unit, which will be described later. For example, the output information may be visual information. Alternatively, for example, the output information may be auditory information.

The motor unit includes at least one motor and may provide driving force to components connected to each motor.

The motor unit may include a wheel motor MW that provides driving force to left and right wheels 310. More specifically, the motor unit may include a first wheel motor MW1 that transmits driving force to a wheel 310 disposed on one side in the left-right direction, and a second wheel motor MW2 that transmits driving force to a wheel 310 disposed on the other side in the left-right direction.

The wheel motors MW may be respectively disposed in the wheel units 300. More specifically, the wheel motor MW may be accommodated inside the lower leg 230. Alternatively, the wheel motor MW may be accommodated inside the wheel 310.

The wheel motor MW is connected to the wheel 310. More specifically, a shaft of the first wheel motor MW1 or a final output end of a gear is connected to the wheel 310 disposed on one side in the left-right direction. A shaft of the second wheel motor MW2 or a final output end of a gear is connected to the wheel 310 disposed on the other side in the left-right direction. Each of the left and right wheel motors MW is driven and rotated according to a control command from the control unit 700, and the robot 1 travels along the ground by the rotation of the wheels 310 according to the rotation of the wheel motors MW.

The motor unit may include a suspension motor MS that provides driving force to the left and right leg units 200. More specifically, the motor unit may include a first suspension motor MS1 that transmits driving force to a leg unit 200 disposed on one side in the left-right direction, and a second suspension motor MS2 that transmits driving force to a leg unit 200 disposed on the other side in the left-right direction.

The suspension motor MS may be disposed in the robot body 100. More specifically, each suspension motor MS may be accommodated inside the body housing 110.

The suspension motor MS is connected to the first link. More specifically, a shaft of the first suspension motor MS1 or a final output end of a gear is connected to the first link disposed on one side in the left-right direction. A shaft of the second suspension motor MS2 or a final output end of a gear is connected to the first link disposed on the other side in the left-right direction. Each of the left and right suspension motors MS is driven and rotated according to a control command from the control unit 700. As the suspension motor MS rotates, the first link rotates, and the lower leg 230 connected to the first link also rotates, such that, as a result, an angle between the first link and the lower leg 230 can be changed.

Through this, the robot 1 is capable of performing an operation of lifting or lowering the wheel 310, and can maintain a horizontal posture when climbing an obstacle or traveling on uneven ground. Alternatively, an operation in which the robot body 100 moves downward or upward becomes possible.

The motor unit may include an arm motor MA that provides rotational force to the arm 400.

The arm motor MA may be disposed in the robot body 100. More specifically, at least one arm motor MA may be accommodated inside the body housing 110.

The arm motor MA is driven and rotated according to a control command from the control unit 700. As the arm motor MA rotates, the rotation coupling portion 410 rotates, and the connection portion 420 formed integrally with the rotation coupling portion 410 also rotates. As a result, the arm 400 can be pivoted with respect to the robot body 100.

Through this, the robot 1 is capable of performing an operation of rotating the arm 400, and the arm 400 can be rotated to be coupled with a functional module. Alternatively, the arm 400 can be made to press against the ground through the rotation of the arm 400.

The sensor unit 600 includes at least one sensor, and each sensor can measure or detect information about an external environment of the robot 1 and/or information about a current state of the robot 1.

The sensor unit 600 may include an obstacle detection camera 610.

The obstacle detection camera 610 is provided to detect an obstacle T existing in an interior in which the robot 1 travels, and to map the structure of the interior.

For this purpose, the obstacle detection camera 610 may be disposed at the front of the robot body 100. More specifically, the obstacle detection camera 610 may be disposed at the front portion of the body housing 110.

Meanwhile, in the present embodiment, a plurality of obstacle detection cameras 610 may be disposed. For example, a first detection camera 611 may be disposed at a front lower portion of the body housing 110, and a second detection camera 612 may be disposed at a front upper portion of the body housing 110. With such a configuration, the obstacle detection camera 610 can detect an object or a person positioned in front of the robot 1.

The obstacle detection camera 610 can detect the obstacle T and can detect the distance to the obstacle T. For example, the first detection camera 611 may be a depth camera.

The obstacle detection camera 610 may capture images of the interior during travel to perform Simultaneous Localization and Mapping (SLAM). For example, the second detection camera 612 may be an RGB camera.

The depth camera and the RGB camera can calculate a distance by irradiating light and then calculating the time it takes for the irradiated light to be reflected and returned.

The control unit 700 may detect the obstacle T and implement SLAM based on information about the surrounding environment captured by the obstacle detection camera 610 and information about a current position of the robot 1.

Meanwhile, the method by which the robot 1 according to an embodiment of the present invention implements SLAM may be a method implemented using only the obstacle detection camera 610, but is not limited thereto. For example, the robot 1 may implement SLAM by further utilizing an additionally provided sensor. The additional sensor may be, for example, a Laser Distance Sensor (LDS).

The sensor unit 600 may include an IR sensor 620 for infrared detection.

The IR sensor 620 may be an IR camera that detects infrared light.

The IR sensor 620 may be disposed on the robot body 100. In an embodiment of the present invention, a plurality of IR sensors 620 may be disposed. For example, a first IR sensor 621 may be disposed at a front lower portion of the body housing 110, and a second IR sensor 622 may be disposed at the rear of the body housing 110. With such a configuration, the position of a light source disposed in various directions can be detected.

The IR sensor 620 may be disposed close to the obstacle detection camera 610. For example, the first IR sensor 621 may be disposed directly below the first obstacle detection camera 611.

With such an arrangement, the IR sensor 620 can detect light irradiated by a lamp of a functional module (not shown) or a robot charging station (not shown), and when the robot body 100 approaches the lamp, the obstacle detection camera 610 can detect the shape of the functional module (not shown) or the robot charging station (not shown).

The IR sensor 620 can approach a specific module by detecting infrared light emitted by an IR LED provided in the module. For example, the module may be a charging station for charging the robot 1. For example, the module may be the functional module (not shown) detachably provided on the robot body 100.

The control unit 700 may control the IR sensor 620 to start detecting the IR LED when a state of charge of the robot 1 is less than or equal to a preset level. The control unit 700 may control the IR sensor 620 to start detecting the IR LED when a command to find a specific module is received from a user.

The sensor unit 600 may include a wheel motor sensor 630.

The wheel motor sensor 630 can measure a position of the wheel motor MW. For example, the wheel motor sensor 630 may be an encoder. As is well known, an encoder can detect a position of a motor and can also detect a rotational speed of the motor.

The wheel motor sensors 630 may be respectively disposed on the left and right wheel motors MW. More specifically, the wheel motor sensor 630 is connected to a shaft of the wheel motor MW or a final output end of a gear, and may be accommodated inside the lower leg 230 together with the wheel motor MW.

The sensor unit 600 may include an arm motor sensor 640.

The arm motor sensor 640 can measure a position of the arm 400. For example, the arm motor sensor 640 may be a photo sensor. As is well known, a photo sensor can measure a degree of rotation of the arm motor MA or a degree of rotation of the arm 400.

The arm motor sensor 640 may be disposed close to the arm motor MA. More specifically, the arm motor sensor 640 may be accommodated inside the body housing 110 or the rotation coupling portion 410 together with the arm motor MA.

A suspension motor sensor 650 can measure a position of the leg unit 200. For example, the suspension motor sensor 650 may be a photo sensor. As is well known, a photo sensor can measure a degree of rotation of the suspension motor MS or a degree of rotation of the upper leg 210.

The suspension motor sensor 650 may be disposed close to the suspension motor MS. More specifically, the suspension motor sensor 650 may be accommodated inside the body housing 110 together with the suspension motor MS.

The sensor unit 600 may include an IMU sensor 660.

The IMU sensor 660 can measure a tilt angle of the robot body 100.

As is well known, an Inertial Measurement Unit (IMU) sensor 660 is a sensor incorporating a 3-axis acceleration sensor, a 3-axis gyro sensor, and a terrestrial magnetism sensor, and is also referred to as an inertial measurement sensor.

The 3-axis acceleration sensor is a sensor that detects gravitational acceleration of an object in a stationary state. Since the gravitational acceleration varies according to an angle at which an object is tilted, a tilt angle is obtained by measuring the gravitational acceleration. However, there is a disadvantage in that a correct value cannot be obtained in a moving acceleration state rather than a stationary state.

The 3-axis gyro sensor is a sensor that measures angular velocity. A tilt angle is obtained by integrating the angular velocity over the total time. However, the angular velocity measured by the gyro sensor suffers from continuous errors due to reasons such as noise, and due to these errors, an offset in the integrated value accumulates and occurs over time.

As a result, when a long period of time passes in a stationary standby state, the tilt of the robot 1 can be accurately measured by the acceleration sensor, but an error occurs by the gyro sensor. In the case of traveling, a precise tilt value of the robot 1 can be measured by the gyro sensor, but a correct value cannot be obtained by the acceleration sensor.

The use of the IMU sensor 660 can compensate for the aforementioned disadvantages of the acceleration sensor and the gyro sensor.

Hereinafter, this specification describes an embodiment in which the IMU sensor 660 is provided.

The IMU sensor 660 may be disposed on the robot body 100. More specifically, the IMU sensor 660 may be disposed adjacent to the control unit 700. The IMU sensor 660 may be mounted and provided on a PCB inside the robot body 100. To improve the measurement accuracy of the tilt angle and direction, it is preferable that the IMU sensor 660 is disposed close to a central area portion of the robot body 100.

The IMU sensor 660 may measure at least one of 3-axis acceleration, 3-axis angular velocity, and 3-axis terrestrial magnetism data of the robot body 100 and transmit the measured data to the control unit 700.

The control unit 700 may calculate a tilted direction and a tilted angle of the robot body 100 using at least one of the acceleration, angular velocity, and terrestrial magnetism data received from the IMU sensor 660. Based on this, the control unit 700 may perform horizontal posture maintenance control of the robot body 100, which will be described later.

The sensor unit 600 may include a cliff sensor 670 for detecting a cliff.

The cliff sensor 670 may be configured to detect a distance from the front ground on which the robot 1 travels. The cliff sensor 670 may be implemented in various ways within a range capable of detecting a relative distance between a point where the cliff sensor 670 is formed and the ground.

For example, the cliff sensor 670 may include a light-emitting portion that irradiates light and a light-receiving portion into which reflected light is incident. The cliff sensor 670 may be formed of an infrared sensor.

The cliff sensor 670 may be disposed on the lower leg 230. For example, a first cliff sensor 671 may be disposed at a front lower end of the lower leg 230, and a second cliff sensor 672 may be disposed at a rear upper side of the lower leg 230. With such a configuration, the distance between the lower leg 230 and the wheel 310, and the ground B, can be measured. In addition, it is also possible to calculate an angle between the lower leg 230 and the ground through a difference in distance between the first cliff sensor 671 and the second cliff sensor 672.

The cliff sensor 670 can irradiate light toward a front floor surface (ground) of the robot 1. The cliff sensor 670 enables preliminary detection of whether a cliff exists in front of a traveling direction of the robot 1.

A light-emitting portion of the cliff sensor 670 can irradiate light obliquely toward the front floor surface (ground). A light-receiving portion of the cliff sensor 670 can receive light that is reflected from the floor surface (ground) and incident thereon. A distance between the front ground and the cliff sensor 670 can be measured based on a difference between a light irradiation timing and a light reception timing.

When the distance measured by the cliff sensor 670 exceeds a preset predetermined value or exceeds a predetermined range, it may be a case where the front ground suddenly becomes lower. Based on this principle, a cliff can be detected.

When a cliff is detected in front, the control unit 700 can control the wheel motor MW so that the robot 1 travels while avoiding the detected cliff. At this time, the control of the wheel motor MW may be a stop control. Alternatively, the control of the wheel motor MW may be a rotation direction switching control.

The sensor unit 600 may include an environmental sensor 680.

The environmental sensor 680 may be configured to measure various environmental states of the outside of the robot 1, that is, the inside of a house where the robot 1 travels. The environmental sensor 680 may include at least one of a temperature sensor, a humidity sensor, and a dust sensor.

For example, the environmental sensor 680 may be disposed on the arm 400. More specifically, the environmental sensor 680 may be disposed on the connection portion 420. As a possible embodiment, information measured by the environmental sensor 680 may be visually displayed on the display 120.

The sensor unit 600 may include a side sensor 690.

The side sensor 690 can measure a distance to an obstacle including a wall surface or the like.

The side sensor 690 may be configured to detect a distance to a side wall surface along which the robot 1 travels. The side sensor 690 may be implemented in various ways within a range capable of detecting a relative distance between a point where the side sensor 690 is disposed and an obstacle.

For example, the side sensor 690 may include a light-emitting portion that irradiates light and a light-receiving portion into which reflected light is incident. The side sensor 690 may be formed of an infrared sensor.

The side sensor 690 may be disposed on both side surfaces of the robot 1. For example, the side sensor 690 may be disposed on an outer surface of the lower leg 230 of the leg unit 200.

The interface unit includes at least one component for interaction between a user and the robot 1, and each component may be provided to input a command from the user and/or output information to the user.

The interface unit may include a microphone 140.

The microphone 140 is a component that recognizes a user's voice and a plurality thereof may be provided. A plurality of microphones 140 may be disposed on the body housing 110. For example, four microphones 140 may be disposed on an upper portion of the body housing 110.

Voice signals received by the microphones 140 can be used for user position tracking. In this case, a known sound source tracking algorithm can be applied. For example, the sound source tracking algorithm may be a three-point measurement method (triangulation method) using a time difference in which the plurality of microphones 140 receive a voice signal. The principle is that the position of the sound source is calculated using the position of each microphone 140 and the speed of sound waves.

Meanwhile, if the microphone 140 and the aforementioned obstacle detection camera 610 cooperate with each other, the robot 1 can be implemented to find the user's position even when the user calls the robot 1 from a distance.

The interface unit may include a speaker 450.

The speaker 450 may be disposed on the arm 400. For example, the speaker 450 may be disposed on the rotation coupling portion 410 of the arm 400. The speaker 450 may be respectively disposed at positions covering both left and right sides of the body housing 110.

The speaker 450 can output information of the robot 1 as sound. A source of the sound output by the speaker 450 may be sound data pre-stored in the robot 1. For example, the pre-stored sound data may be voice data of the robot 1. For example, the pre-stored sound data may be a notification sound guiding the status of the robot 1. Meanwhile, the source of the sound output by the speaker 450 may be sound data received through a communication unit 710.

The interface unit may include a display 120 and an input unit 125.

The display 120 may include a display disposed in one or more modules. The display 120 may be disposed at a front upper portion of the robot body 100.

The display 120 may be formed of any one of a Light Emitting Diode (LED), a Liquid Crystal Display (LCD), a Plasma Display Panel (PDP), and an Organic Light Emitting Diode (OLED).

Information such as operating time information of the robot 1 and power information of the battery 800 may be displayed on the display 120.

A facial expression of the robot 1 may be displayed on the display 120. Alternatively, eyes of the robot 1 may be displayed on the display 120. Through the shape of the face or the shape of the eyes displayed on the display 120, the current state of the robot 1 may be personified and expressed as emotions. For example, when the user returns home after going out, a smiling facial expression or a smiling eye shape may be displayed on the display 120. Accordingly, an effect can be obtained in which the user feels a sense of interaction with the robot 1.

The input unit 125 may be configured to receive a control command for controlling the robot 1 from the user. For example, the control command may be a command for changing various settings of the robot 1. For example, the settings may include a voice volume, display brightness, power saving mode settings, and the like.

The input unit 125 may be disposed on the display 120.

The input unit 125 generates key input data input by the user to control the operation of the robot 1. For this purpose, the input unit 125 may be composed of a key pad, a dome switch, a touch pad (resistive/capacitive), and the like. In particular, when the touch pad forms a mutual layer structure with the first display, this may be referred to as a touch screen.

The communication unit 710 may be provided for signal transmission between various components inside the robot 1. The communication unit 710 may support, for example, Controller Area Network (CAN) communication. The signal may be, for example, a control command transmitted from the control unit 700 to other components.

The communication unit 710 may support wireless communication with other devices existing outside the robot 1. As a wireless communication module for supporting wireless communication, a short-range communication module or a long-range communication module may be provided.

The short-range communication may be, for example, Bluetooth communication, Near Field Communication (NFC), or the like.

The long-range communication may be, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTE-A), Wireless Mobile Broadband Service (WMBS), Bluetooth Low Energy (BLE), Zigbee, Radio Frequency (RF), Long Range (LoRa), or the like.

The memory 720 is a component in which various data for driving and operation of the robot 1 are stored.

The memory 720 may store application programs for autonomous driving of the robot 1 and various related data. The memory 720 may also store each piece of data sensed by the sensor unit 600, and may store setting information regarding various settings selected or input by a user.

The memory 720 may include magnetic storage media or flash storage media, but the scope of the present invention is not limited thereto. The memory 720 may include internal memory and/or external memory, and may include volatile memory such as DRAM, SRAM, or SDRAM; non-volatile memory such as One Time Programmable ROM (OTPROM), PROM, EPROM, EEPROM, mask ROM, flash ROM, NAND flash memory, or NOR flash memory; a flash drive such as a Solid State Drive (SSD), a Compact Flash (CF) card, an SD card, a Micro-SD card, a Mini-SD card, an Xd card, or a memory stick; or a storage device such as an HDD.

The memory 720 may be included in the control unit 700 or may be provided as a separate component.

The battery 800 is configured to supply power to other components forming the robot 1.

The battery 800 may be disposed in the robot body 100. More specifically, the battery 800 may be accommodated inside the body housing 110. Although not shown, the battery 800 may be disposed further rearward than the suspension motor MS.

The battery 800 may be charged by an external power source, and for this purpose, a charging terminal 130 for charging the battery 800 may be provided at one side of the robot body 100. As in the embodiment of the present invention, the charging terminal 130 may be disposed at a lower portion of the robot body 100. Accordingly, the robot 1 can be easily coupled to a charging station by approaching the charging station and descending, such that the charging terminal 130 is seated onto a corresponding terminal of the charging station from above.

### Obstacle Traversal Control

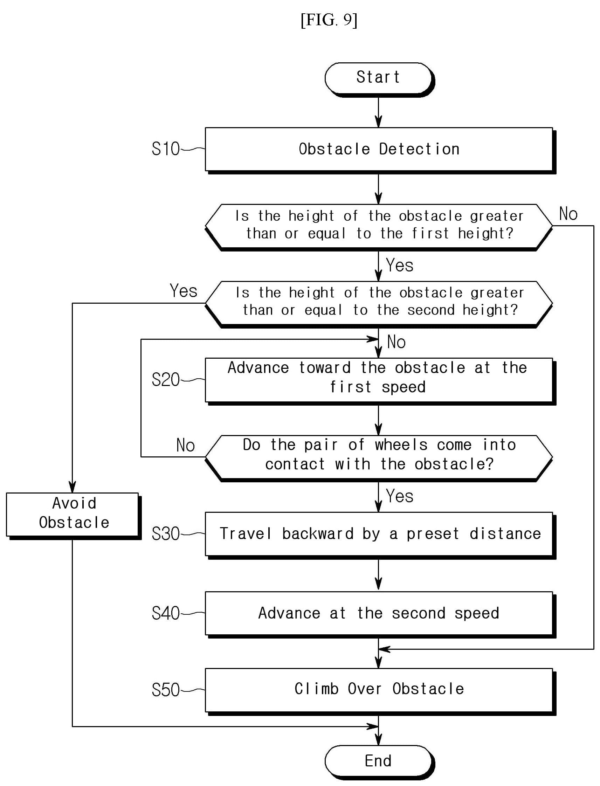

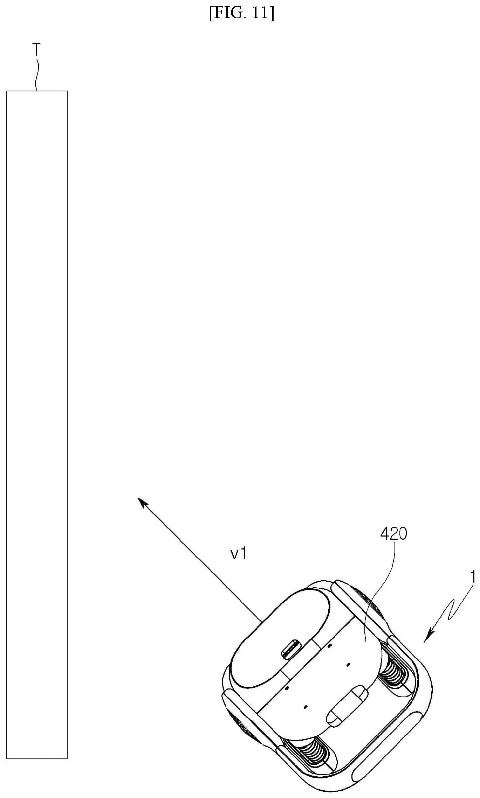

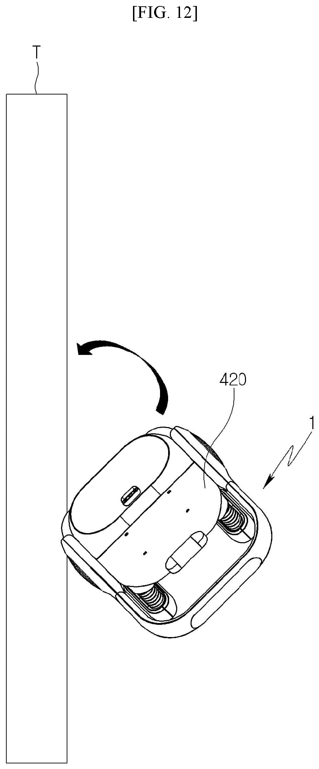

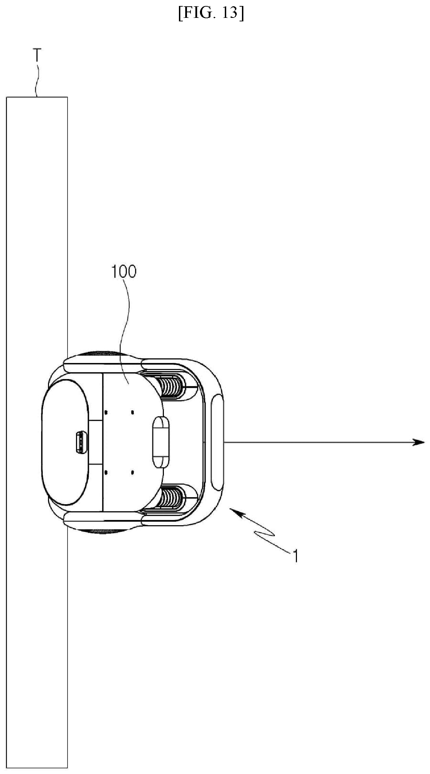

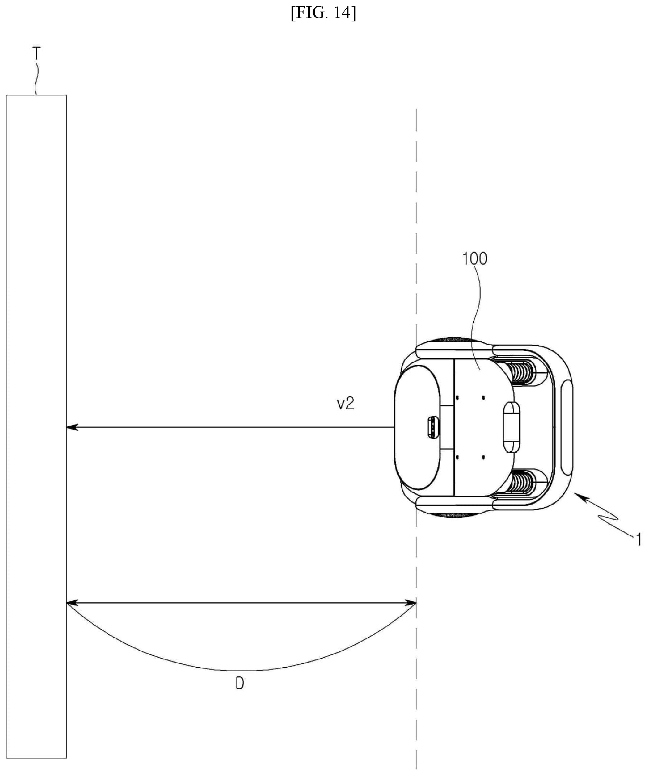

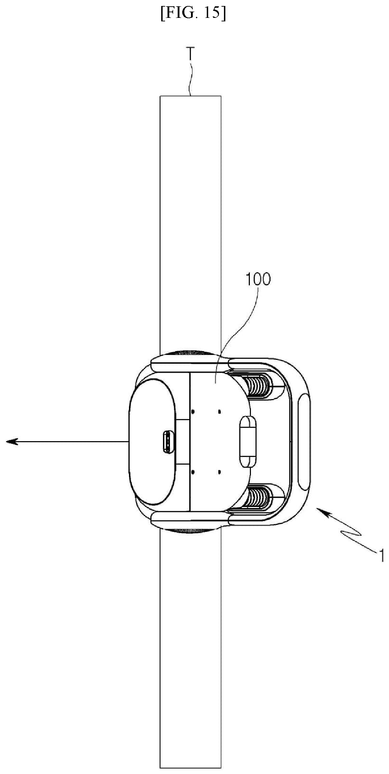

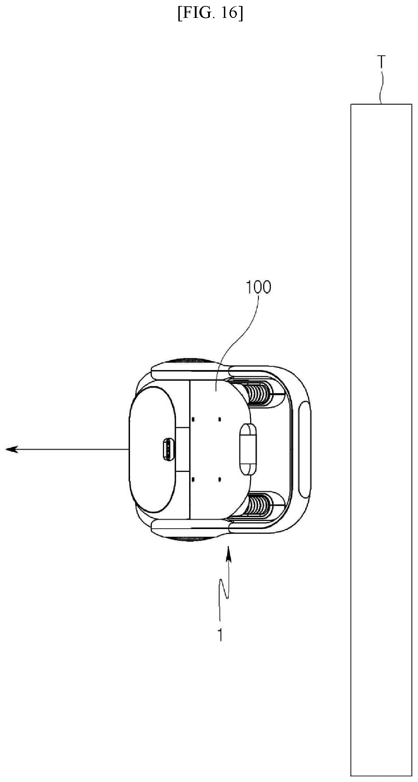

Meanwhile, FIG. 9 is a flowchart for explaining a method for controlling a robot according to an embodiment of the present invention, FIG. 10 is a view for explaining a situation in which a robot according to an embodiment of the present invention detects an obstacle, and FIGS. 11 to 16 are views for explaining a situation in which a robot according to an embodiment of the present invention climbs over an obstacle.

The method for controlling a robot according to an embodiment of the present invention will be described with reference to FIGS. 9 to 16.

The method for controlling a robot according to an embodiment of the present invention includes an obstacle detection step S10, an approaching step S20, a reversing step S30, and a climbing step S40.

The obstacle detection step S10, the approaching step S20, the reversing step S30, and the climbing step S40 may be performed while the robot 1 travels along the ground B by rotating the wheel 310.

In the obstacle detection step S10, the control unit 700 may detect an obstacle T disposed on the ground B. Specifically, in the obstacle detection step S10, the obstacle detection camera 610 or the cliff sensor 670 may detect the terrain in front of the robot 1. That is, the obstacle detection camera 610 or the cliff sensor 670 can detect a distance to an object disposed in front, and can thereby detect that a height difference occurs on the ground B.

At this time, if an obstacle T having a height of a preset first height H1 or more is placed on the ground B, the obstacle detection camera 610 or the cliff sensor 670 may detect this and transmit to the control unit 700 that the obstacle T is present. For example, if an obstacle T having a height of 1.0 cm or more is placed on the ground B, the obstacle detection camera 610 or the cliff sensor 670 may detect this and transmit to the control unit 700 that the obstacle T is present (see FIG. 10).

At this time, the control unit 700 may detect an angle formed between the obstacle T disposed on the ground B and the robot 1. That is, in the obstacle detection step S10, the control unit 700 may draw a virtual line with respect to a forward traveling direction of the robot 1, and calculate an angle formed between a longitudinal direction of the obstacle T and the forward traveling direction of the robot 1.

According to an embodiment, the control unit 700 may stop the traveling of the robot 1. That is, the control unit 700 may stop the movement of the robot body 100.

Thereafter, the control unit 700 may determine whether to climb over the obstacle T and a path for climbing over the obstacle T, using the overall shape of the obstacle T and information about the surrounding terrain. For example, when the height of the obstacle T is greater than or equal to a preset limit height, the control unit 700 may determine to avoid the obstacle T by moving around it rather than climbing over the obstacle T. For example, when the height of the obstacle T is 2.0 cm or more, the control unit 700 may determine to avoid the obstacle T by moving around it rather than climbing over the obstacle T.

On the other hand, when the height of the obstacle T is less than the preset limit height (hereinafter, referred to as a second height H2) (for example, less than 2.0 cm), the control unit 700 may determine to climb over the obstacle T.

Meanwhile, in the obstacle detection step S10, the control unit 700 may control the wheel 310 to rotate so that the robot body 100 travels along the ground at a preset first speed v1.

After the obstacle detection step S10, in the approaching step S20, the robot 1 may travel forward toward the obstacle.

Specifically, in the approaching step S20, the control unit 700 may control the wheel 310 to rotate so that the robot body 100 travels along the ground at the first speed v1. At this time, the control unit 700 may rotate the pair of wheels 310 at the same rotational speed so as to advance toward the obstacle T.

Accordingly, at least one of the pair of wheels 310 of the robot 1 may come into contact with the obstacle T.

At this time, when the height of the obstacle T is less than the first height H1, the wheel 310 that has come into contact with the obstacle T may climb over the obstacle T.

On the other hand, when the height of the obstacle T is greater than or equal to the first height H1 and less than the second height H2, the control unit 700 may continue to rotate the wheel 310.

At this time, the control unit 700 may control the pair of wheels 310 to continue rotating. In this case, the wheel 310 that has come into contact with the obstacle T may not climb over the obstacle T and may remain in contact with the obstacle T.

Alternatively, the control unit 700 may control the wheel that has come into contact with the obstacle T to stop rotating and rotate only the wheel 310 that has not come into contact with the obstacle T.

Accordingly, when the height of the obstacle T is greater than or equal to the first height H1 and less than the second height H2, the pair of wheels 310 may both come into contact with the obstacle T.

As a result, in the approaching step S20, when the height of the obstacle T is greater than or equal to the first height H1 and less than the second height H2, the pair of wheels 310 can both be brought into contact with the obstacle T. This means that the front of the robot body 100 and the longitudinal direction of the obstacle T become mutually perpendicular. Thereafter, a reversing step S30, which will be described later, is performed.

Meanwhile, when the height of the obstacle T is less than the first height H1 in the approaching step S20, the robot may climb over the obstacle T. In this case, the method for controlling a robot according to an embodiment of the present invention may be terminated.

In the reversing step S30, when the pair of wheels 310 come into contact with the obstacle T in the approaching step S20, the robot may travel backward so as to move away from the obstacle T by a preset distance.

In the reversing step S30, the control unit 700 may control the pair of wheels 310 to rotate so that the robot body 100 travels along the ground. At this time, the control unit 700 may cause the robot to travel backward so as to move away from the obstacle T.

For example, the backward traveling speed of the robot body 100 may be the first speed v1, or may be less than the first speed v1, but is not limited thereto.

In the reversing step S30, the robot body 100 or the wheel 310 may travel backward by a preset reverse distance D.

The reverse distance D may refer to a distance over which the robot 1 can gain acceleration so as to advance and climb over the obstacle T. For example, the reverse distance D may be 3.0 cm. A position at which the robot 1 stops after traveling backward in this way may be referred to as a climbing preparation position.

In the reversing step S30, the control unit 700 may stop the robot body 100 after it has traveled backward by the reverse distance D from the obstacle T. At this time, the control unit 700 does not stop the rotation of the wheel 310, but may control the wheel 310 so that the robot body 100 maintains its balance without falling.

As a result, in the reversing step S30, the front of the robot body 100 and the longitudinal direction of the obstacle T are disposed in a mutually perpendicular direction, and the robot 1 may stop with the obstacle T and the wheel 310 spaced apart from each other by the reverse distance D. Thereafter, a climbing step S40 is performed.

In the climbing step S40, the robot 1 may advance toward the obstacle and climb over the obstacle T.

In the climbing step S40, the control unit 700 may control the pair of wheels 310 to rotate so that the robot body 100 travels forward toward the obstacle T.

In the climbing step S40, the control unit 700 may control the pair of wheels 310 so that the robot body 100 advances at a preset second speed v2. At this time, the second speed v2 may be greater than the first speed v1. For example, the second speed v2 may be 0.40 m/s or more and 0.50 m/s or less.

However, the moving speed of the robot 1 is not maintained at the second speed v2 at all times; the speed may be 0 when starting from the climbing preparation position, and may gradually accelerate to reach the second speed v2 when climbing over the obstacle T.

Accordingly, when the robot 1 accelerates to the second speed v2 and advances in the climbing step S40, it can climb over the obstacle T.

In a climbing completion determination step S50, after the climbing step S40, the control unit 700 may determine whether the robot 1 has climbed over the obstacle T.

At this time, the control unit 700 may determine whether the robot 1 has climbed over the obstacle T by using at least one of the methods described below.

Specifically, the control unit 700 may calculate a distance the robot 1 has advanced, and determine whether the calculated forward distance is greater than or equal to the reverse distance D.

Alternatively, the control unit 700 may determine whether the surface on which it is currently traveling is a flat floor. Specifically, the control unit 700 may calculate whether the robot body 100 is tilted through an IMU sensor 660, and determine whether the robot 1 is traveling on a flat floor.

Alternatively, the control unit 700 may determine whether an obstacle remains in front. Specifically, the control unit 700 may detect an obstacle T in front through the obstacle detection camera 610 or the cliff sensor 670, and determine whether an obstacle remains in front.

Through this, if the control unit 700 determines that the robot 1 has climbed over the obstacle T, it may terminate the method for controlling a robot according to an embodiment of the present invention.

Accordingly, according to the present invention, there is an effect in that, when the robot climbs over an obstacle, if the obstacle T is low, the robot climbs over it directly, and if the obstacle T is high, the robot reverses and then takes a run-up so as to quickly climb over the obstacle T.

In addition, according to the present invention, since the robot reverses in a state where the pair of wheels are in contact with the obstacle, rather than continuously sensing the obstacle and correcting its posture while spaced apart from the obstacle in order to find a direction perpendicular to the longitudinal direction of the obstacle, there is an advantage in that the direction perpendicular to the obstacle can be quickly determined and the robot can easily climb over the obstacle.

In addition, according to the present invention, there is an advantage in that, by raising the height of an obstacle that the robot can climb over, the robot can be used without spatial restrictions.

Although the present invention has been described in detail above through specific embodiments, this is for the purpose of specifically explaining the present invention, and the present invention is not limited thereto. It is apparent that modifications or improvements can be made by a person having ordinary skill in the art without departing from the scope of the appended claims.

The specific scope of protection of the present invention will become clear from the appended claims.

## Claims

1. A robot comprising:
a robot body in which a motor and a battery are accommodated;
a pair of leg units provided on the robot body; and
a pair of wheels rotatably coupled to the pair of leg units, respectively,
wherein, when the robot body is located within a preset reference distance from an obstacle having a predetermined height or more, the robot body travels toward the obstacle after moving away from the obstacle.

2. The robot of claim 1, wherein the robot body travels at a preset first traveling speed, and travels at a second traveling speed different from the first traveling speed when the robot body travels toward the obstacle after moving away from the obstacle.

3. The robot of claim 2, wherein the second traveling speed is faster than the first traveling speed.

4. A robot comprising:
a robot body in which a motor and a battery are accommodated;
a pair of leg units provided on the robot body; and
a pair of wheels rotatably coupled to the pair of leg units, respectively,
wherein, when the robot body is located within a preset reference distance from an obstacle having a predetermined height or more, the robot body travels forward toward the obstacle until the pair of wheels are both in contact with the obstacle, and
when the pair of wheels are both in contact with the obstacle, the robot body travels backward so as to move away from the obstacle by a preset distance and then travels forward toward the obstacle.

5. The robot of claim 4, wherein the robot body climbs over the obstacle.

6. The robot of claim 4, wherein the robot body climbs over the obstacle when a height of the obstacle is greater than or equal to a preset first height and less than a preset second height, and avoids the obstacle when the height of the obstacle is greater than or equal to the second height.

7. The robot of claim 1, further comprising:
a sensor unit disposed on the robot body or the leg unit and configured to measure a distance to the obstacle.

8. A method for controlling a robot comprising a pair of leg units and wheels respectively coupled to the leg units, the method comprising:
an obstacle detection step of detecting an obstacle disposed on a ground while the robot travels at a preset first speed along the ground by rotating the wheel; and
a climbing step of, when a longitudinal direction of the obstacle is perpendicular to a front of the robot, advancing forward at a second speed greater than the first speed to climb over the obstacle.

9. The method of claim 8, wherein, when a height of the obstacle detected in the obstacle detection step is greater than or equal to a preset first height and less than a preset second height, the climbing step is performed, and
wherein, when the height of the obstacle is less than the first height, the robot climbs over the obstacle by advancing toward the obstacle at the first speed.

10. The method of claim 9, wherein, when the height of the obstacle is greater than or equal to the second height, the obstacle is avoided.

11. The method of claim 8, further comprising:
an approaching step of traveling forward toward the obstacle after the obstacle detection step.

12. The method of claim 11, further comprising:
a reversing step of, when the pair of wheels come into contact with the obstacle in the approaching step, traveling backward so as to move away from the obstacle by a preset distance.
